# FASCICULE DE BREVET EUROPEEN

(11) **EP 3 278 168 B1**
(45) Date de publication et mention de la délivrance du brevet: **13.03.2024**
(21) Numéro de dépôt: 16716491.2
(22) Date de dépôt: 23.03.2016
(51) Int. Cl.: G02B 26/08, F16F 13/00, F16F 3/00

(54) **ACTUATEUR ELECTROMECANIQUE POUR MIROIR DEFORMABLE**
ELEKTROMAGNETISCHER AKTUATOR FÜR VERFORMBAREN SPIEGEL
ELECTROMAGNETIC ACTUATOR FOR DEFORMABLE MIRROR

(30) Priorité: 31.03.2015 FR 1552750
(43) Date de publication de la demande: 07.02.2018
(73) Titulaire: Imagine Optic, 91400 Orsay (FR)
(72) Inventeur: LEVECQ, Xavier, 91190 Gif sur Yvette (FR); LEFAUDEUX, Nicolas, 75014 Paris (FR)
(74) Mandataire: Osha BWB
(86) Numéro de dépôt international: PCT/EP2016/056425
(87) Numéro de publication internationale: WO 2016/156158

(56) Documents cités:
- FR-A1- 2 847 742
- US-A- 1 304 955
- US-A- 1 630 199
- US-A- 3 087 469
- US-A1- 2013 322 471
- US-B1- 6 192 064

## Description

### Domaine technique

La présente description concerne un actionneur électromécanique pour miroir déformable. Elle concerne également un miroir déformable muni d'une pluralité d'actionneurs électromécaniques et s'applique notamment au domaine de l'optique adaptative.

### Etat de l'art

Dans le domaine des lasers de puissance notamment, de nombreux composants optiques (miroir, lentilles, cristaux d'amplification...) perturbent la qualité du front d'onde du faisceau laser. Ceci est dû en particulier à l'augmentation du nombre d'étages d'amplification, à la taille des faisceaux et celle des optiques et à l'énergie des faisceaux de pompe. Lorsqu'un utilisateur souhaite focaliser le faisceau sur la cible pour réaliser une expérience, la qualité de la tache de focalisation est perturbée par ces défauts du front d'onde et la densité de puissance maximale sur la cible est loin d'être aussi intense qu'elle pourrait l'être sans ces défauts. Dans cette configuration, la correction du front d'onde par un système d'optique adaptative permet d'obtenir, in fine, des densités de puissance sur cible proches des valeurs optimales attendues.

Un système d'optique adaptative comprend généralement un système de mesure du front d'onde et un système de modulation du front d'onde permettant la correction des défauts du front d'onde. Dans le domaine des lasers de puissance, le système de modulation du front d'onde comprend en général un miroir déformable. Un miroir déformable est composé d'un substrat déformable réfléchissant et d'actionneurs permettant de déformer localement ce dernier de manière contrôlée.

La demande de brevet publiée US 2013/0322471 décrit ainsi un miroir déformable pour la correction d'aberrations avec une surface réfléchissante déformable et un ensemble d'actuateurs qui exercent chacun une force localisée sur la face arrière de la surface déformable pour contrôler collectivement le profil de la surface réfléchissante.

Il existe actuellement plusieurs types d'actionneurs pour miroir déformable, adaptés à la déformation locale du substrat réfléchissant.

Certains actionneurs connus sont réalisés à base de matériaux piézo-électriques, électrostrictifs ou magnétostrictifs. Ces actionneurs présentent l'inconvénient, non seulement de présenter un taux d'hystérésis important, mais également de nécessiter l'utilisation d'une fonction de commande complexe afin de réguler l'effort appliqué. Ces actionneurs nécessitent, en outre, un apport en énergie continu et ininterrompu afin de maintenir la déformation appliquée au substrat réfléchissant.

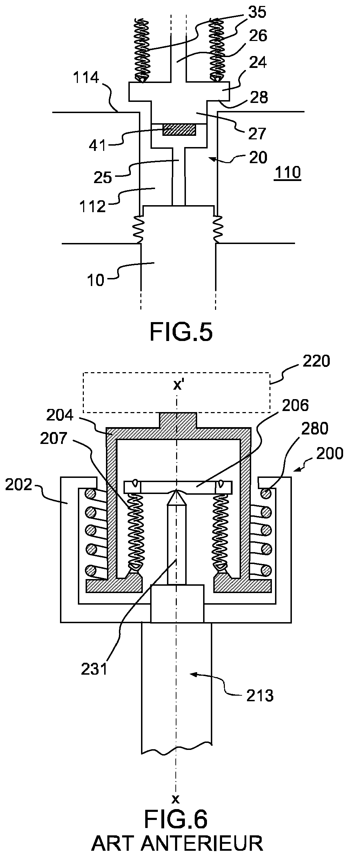

D'autres actionneurs, de type électromécanique, comportent un moteur pas à pas ou un moteur à courant continu permettant de maintenir l'effort appliqué sans nécessiter un apport d'énergie continu. Le brevet FR 2 847 742 décrit ainsi un actionneur de type électromécanique adapté pour un déplacement de faible course (micrométrique) d'un élément. Un tel actionneur permet en outre de générer et maîtriser un effort bidirectionnel; un exemple d'un tel actionneur est représenté sur la figure 6. L'actionneur 200 comporte un corps fixe 202 et un ensemble mobile avec une première partie 204 reliée au corps fixe par l'intermédiaire d'un premier moyen élastique 280, dans cet exemple un ressort en compression, et une deuxième partie 206 reliée à la première partie par un deuxième moyen élastique 207, dans cet exemple un ensemble de ressorts en traction. La première partie mobile 204 est par exemple un cadre destiné à venir en contact avec un élément 220 sur lequel un effort doit être appliqué (représenté en pointillés sur la figure 6). La deuxième partie 206 de l'ensemble mobile est déplacée par un moyen d'entraînement 213, par exemple un vérin de positionnement micrométrique avec un doigt 231, pour assurer une translation de l'ensemble mobile par rapport au corps fixe 202. L'actionneur 200 permet de maintenir un effort appliqué à un élément sans nécessiter un apport d'énergie continu. Toutefois, de par sa conception, le moyen d'entrainement 213 de l'actionneur 200 présente un déséquilibre entre l'effort qu'il transmet et l'effort qu'il subit. En effet, même en milieu de course du vérin, lorsque l'actionneur 200 est dans une position neutre du point de vue de l'effort transmis à l'élément 220, c'est-à-dire que les forces exercées par les ressorts 207 et 280 s'opposent afin qu'aucun effort ne soit transmis via le cadre flottant 204, le moyen d'entraînement continue de subir un effort du fait de la force de réaction exercée par la deuxième partie mobile 206 sur le doigt 231 du vérin 213. L'effort permanent subit par le moyen d'entraînement engendre une usure prématurée de certaines pièces.

La présente description propose un actionneur électromécanique pour miroir déformable permettant de palier aux inconvénients précités.

### RESUME

Selon un premier aspect, la présente description concerne un actionneur pour la génération d'un effort bidirectionnel, c'est à dire la génération d'un effort selon l'une ou l'autre de deux directions de sens opposés ; l'actionneur selon le premier aspect est adapté à être intégré dans un miroir déformable comprenant un châssis et un substrat déformable réfléchissant, de telle sorte à permettre, une fois intégré dans le miroir déformable, d'appliquer un effort sur le substrat déformable réfléchissant en vue de le déformer.

L'actionneur comprend un corps fixe configuré pour être monté solidaire dudit châssis, un dispositif d'entraînement, une tige d'entraînement apte à être entraînée, au moyen du dispositif d'entraînement, dans un mouvement de translation par rapport au corps fixe selon un axe de translation, et une tête flottante destinée à être fixée au substrat déformable réfléchissant. La tête flottante est montée de façon flottante par rapport à la tige d'entraînement au moyen de premier et deuxième moyens élastiques, montés chacun entre la tige d'entraînement et la tête flottante et destinés à appliquer sur la tête flottante des forces dont les projections sur l'axe de translation sont de sens opposés.

La configuration des premier et second moyens élastiques entre la tige d'entraînement et la tête flottante permet d'assurer un équilibre entre les efforts transmis par l'actionneur et les efforts subits par le dispositif d'entraînement lorsque l'actionneur est intégré dans le miroir déformable. De cette sorte, dans une position neutre de la tige d'entraînement pour laquelle aucun effort n'est appliqué sur le substrat déformable, le dispositif d'entraînement ne subit en retour aucun effort des premier et/ou second moyens élastiques, ce qui évite une usure prématurée des pièces du dispositif d'entraînement.

Par ailleurs, le premier moyen élastique et le deuxième moyen élastique étant configurés pour pouvoir appliquer sur la tête flottante des forces dont les projections sur l'axe de translation sont de sens opposés, il est possible au moyen de l'actionneur de générer un effort bidirectionnel sur le substrat déformable réfléchissant lorsque celui-ci est intégré dans le miroir déformable.

Selon un ou plusieurs exemples de réalisation, les premier et deuxième moyens élastiques sont précontraints, de telle sorte que dans une position neutre de la tige d'entraînement pour laquelle aucun effort n'est appliqué sur le substrat déformable, les forces appliquées respectivement par le premier moyen élastique et par le deuxième moyen élastique sont non nulles et s'opposent. Cette configuration permet, lors de la génération d'un effort non nul sur le substrat, dans un sens ou dans un autre, que chacun des moyens élastiques contribue à la génération de l'effort.

Selon un ou plusieurs modes de réalisation, chaque moyen élastique comprend un ou plusieurs ressorts, par exemple un ou plusieurs ressorts de traction ou de compression.

Selon un ou plusieurs modes de réalisation, au moins un moyen élastique comprend entre deux et quatre ressorts de traction, par exemple 3 ressorts de traction.

Selon un ou plusieurs modes de réalisation, au moins un moyen élastique comprend un ressort de compression centré sur la tige d'entraînement.

Selon un ou plusieurs modes de réalisation, la tige d'entraînement de l'actionneur comprend un bras d'entraînement et une tige montée de façon amovible sur le bras d'entraînement. Les premier et deuxième moyens élastiques sont alors agencés entre la tête flottante et la tige. Un mode de réalisation dans lequel la tige est amovible est rendu possible du fait qu'aucun des moyens élastiques ne relient la tête flottante et le corps fixe de l'actionneur. Ainsi, il est possible de fixer l'actionneur sur le substrat déformable du miroir et, en cas d'usure ou de détérioration du dispositif d'entraînement, ce dernier peut être décroché aisément de l'actionneur et un nouveau dispositif d'entraînement peut être installé sans qu'il soit nécessaire d'intervenir sur le substrat ou à proximité du substrat déformable du miroir, ce qui évite tout risque d'endommagement.

Selon un ou plusieurs modes de réalisation, la tige comprend des moyens d'accrochage de la tige sur le bras d'entraînement, lesdits moyens d'accrochage pouvant comprendre selon un exemple un ou plusieurs aimants agencés sur l'un et/ou sur l'autre de la tige et du bras d'entraînement, ce qui permet un accrochage/décrochage aisé de la partie amovible de l'actionneur.

Selon un ou plusieurs modes de réalisation, la tête flottante comprend un cadre arrangé autour d'une partie supérieure de la tige d'entraînement, le cadre présentant une paroi supérieure destinée à être fixée au substrat déformable et une paroi inférieure opposée à la paroi supérieure et le premier moyen élastique est monté entre la partie supérieure de la tige d'entraînement et la paroi inférieure du cadre.

Selon un exemple, le deuxième moyen élastique est monté entre une partie inferieure de la tige d'entraînement située à l'extérieur du cadre et la paroi inférieure du cadre.

Selon un autre exemple, le deuxième moyen élastique est monté entre la partie supérieure de la tige d'entraînement et la paroi supérieure du cadre.

Selon l'un ou l'autre de ces exemples, dans un mode de réalisation, le premier moyen élastique et le deuxième moyen élastique sont identiques.

Selon un ou plusieurs modes de réalisation, le premier moyen élastique fonctionne en compression et est monté entre la tige d'entraînement et la tête flottante et le deuxième moyen élastique fonctionne en traction et est monté entre la tige d'entraînement et la tête flottante. Dans ce mode de réalisation, la tête flottante ne comprend plus nécessairement un cadre arrangé autour de la tige d'entraînement. La tête flottante peut prendre toute forme ; elle comprend une paroi destinée à être fixée au substrat déformable réfléchissant et une paroi à laquelle sont reliés les premier et deuxième moyens élastiques, ces parois pouvant être confondues en une seule paroi.

Selon un ou plusieurs modes de réalisation, la tige d'entraînement comprend au moins une traverse pour le montage du premier et/ou du deuxième moyen élastique. La traverse facilite le montage des moyens élastiques. Dans les exemples dans lesquels les premier et deuxième moyens élastiques sont fixés respectivement au niveau d'une partie supérieure de la tige d'entrainement et au niveau d'une partie inférieure de la tige d'entraînement, la tige d'entraînement peut comprendre une première et une deuxième traverse. Dans les exemples dans lesquels l'actionneur comprend des moyens d'accrochage entre un bras d'entraînement et une tige amovible, une traverse peut être formée par le dispositif d'accrochage.

Selon un ou plusieurs exemples de réalisation, le dispositif d'entraînement comprend un moteur linéaire permettant un déplacement contrôlé de la tige d'entrainement, par exemple un déplacement micrométrique. Le moteur linéaire peut être formé de tout moyen connu de l'homme de l'art permettant d'entraîner la tige d'entraînement en translation ; par exemple un moteur rotatif associé à un système vis/écrou, un vérin micrométrique, un moteur piézoélectrique, un moteur magnétique, un moteur électrostrictif, etc.

Selon un second aspect, la présente description concerne un miroir déformable comprenant un châssis, un substrat réfléchissant déformable monté sur le châssis et une pluralité d'actionneurs tels que décrits précédemment. Selon un ou plusieurs modes de réalisation, le corps fixe de chaque actionneur est solidaire du châssis et la tête flottante de chaque actionneur est solidaire du substrat réfléchissant déformable.

La liaison entre le substrat réfléchissant et le châssis peut être une liaison souple ou une liaison rigide.

Selon un ou plusieurs modes de réalisation, le châssis comporte pour chaque actionneur, un logement apte à recevoir au moins partiellement le corps fixe de l'actionneur. Il comporte en outre une plage aux abords du logement qui forme une butée pour la tige d'entraînement.

### BREVE DESCRIPTION DES DESSINS

D'autres avantages et caractéristiques de l'invention apparaîtront à la lecture de la description, illustrée par les figures suivantes qui représentent:
- Figures 1A à 1C, des schémas illustrant des exemples d'actionneurs électromécaniques pour miroir déformable, selon la présente description;
- Figure 2A, un schéma illustrant une variante de l'actionneur représenté sur la figure 1A, dans laquelle la tige d'entraînement comprend un bras d'entraînement et une tige montée de façon amovible sur le bras d'entraînement;
- Figure 2B, un schéma représentant un exemple de moteur linéaire comprenant un système vis/écrou entraîné par un moteur rotatif, selon un exemple de réalisation ;
- Figures 3A, 3B, 3C et 3D, des schémas illustrant différents états d'un actionneur selon la présente description;
- Figure 4, un schéma illustrant un exemple de miroir déformable équipé d'actionneurs selon la présente description;
- Figure 5, un schéma illustrant l'agencement d'un actionneur dans le châssis d'un miroir déformable de telle sorte à ce que le châssis forme une butée pour la tige d'entraînement, selon un exemple de réalisation ;
- Figure 6, un schéma d'un actionneur selon l'art antérieur.

Par soucis de cohérence, les éléments identiques sont repérés par les mêmes références dans les différentes figures.

### DESCRIPTION DETAILLEE

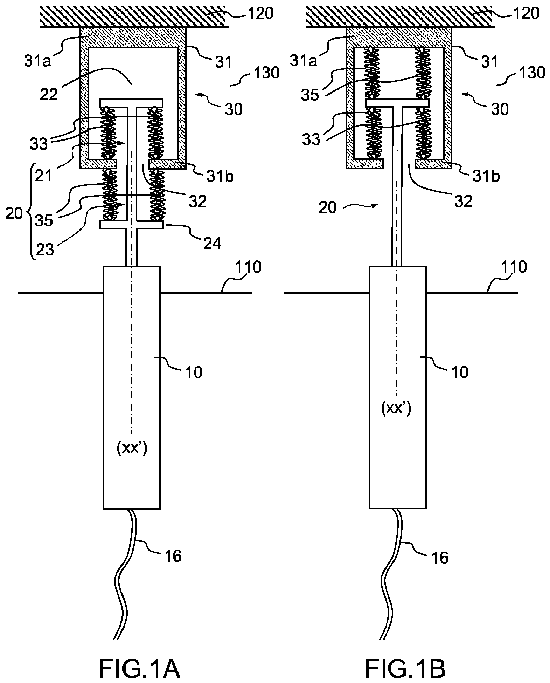

Les figures 1A à 1C représentent différents exemples d'actionneurs électromécaniques 130 adaptés à la génération d'un effort bidirectionnel sur un substrat réfléchissant déformable 120 d'un miroir déformable.

L'actionneur 130 représenté dans chacun des exemples des figures 1A à 1C comprend un corps fixe 10, une tige d'entraînement 20 apte à être entraînée dans un mouvement de translation selon un axe de translation (xx') par rapport au corps fixe 10, au moyen d'un dispositif d'entraînement (non représenté sur les figures 1A à 1C), et une tête flottante 30 destinée à être fixée au substrat déformable 120, la tête flottante 30 étant reliée à la tige d'entraînement 20 au moyen de premier et deuxième moyens élastiques 33, 35. Le dispositif d'entraînement est par exemple alimenté électriquement au moyen d'une alimentation électrique 16.

Les liaisons élastiques entre la tête 30 et la tige d'entraînement 20 confèrent à la tête son caractère flottant. Ce type de liaison autorise des désalignements ou mouvements angulaires et latéraux entre la tige d'entraînement et la tête flottante 30 en contact avec le substrat déformable 120 sans engendrer de couple parasite qui pourrait générer une déformation non souhaitée du substrat. Par ailleurs, les premier et deuxième moyens élastiques 33, 35 sont agencés pour pouvoir appliquer sur la tête flottante des forces dont les projections sur l'axe de translation (xx') sont de sens opposés. Cet agencement permet, comme cela sera décrit par la suite, l'application d'un effort bidirectionnel, c'est-à-dire en traction ou en poussée, sur le substrat déformable 120.

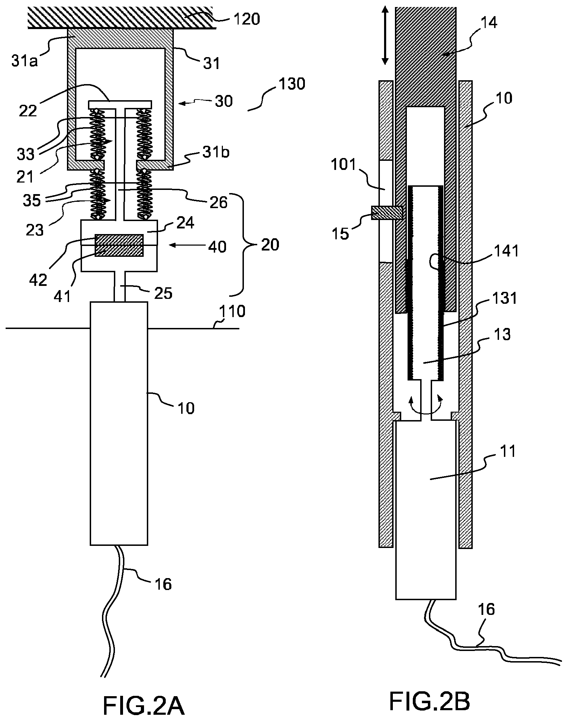

Le dispositif d'entraînement comprend par exemple un moteur linéaire, dont un exemple est décrit sur la figure 2B, et permet un mouvement en translation de la tige d'entraînement selon un axe de translation (xx'). Le mouvement en translation de la tige d'entraînement présente une amplitude totale par exemple de l'ordre du millimètre, et est transformé au moyen de l'actionneur 130 en un effort contrôlé appliqué au substrat déformable 120 afin de générer des déformations dont l'amplitude totale peut être de l'ordre de plusieurs microns avec une résolution nanométrique. L'amplitude des déformations dépend de la raideur du substrat déformable et des moyens de fixation du substrat sur le châssis.

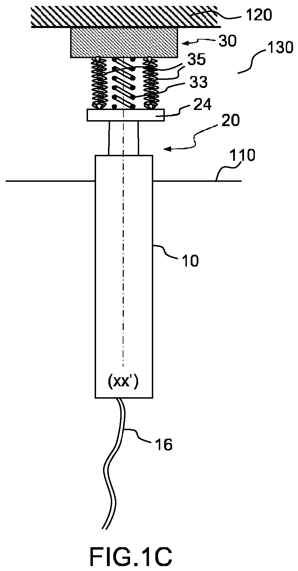

Les premier et deuxième moyens élastiques (33, 35) comprennent chacun dans les exemples des figures 1A à 1C un ou plusieurs ressorts de traction ou de compression, et sont montés entre la tige d'entraînement 20 et la tête flottante 30. Par exemple, un moyen élastique peut comprendre entre 2 et 4 ressorts de traction ; par exemple, 3 ressorts de traction pour un moyen élastique permettent une bonne répartition de l'effort. Dans le cas de l'utilisation d'un ressort de compression, celui-ci peut être centré sur l'axe de la tige d'entraînement, comme représenté sur la figure 1C (ressort 33). Alternativement, chaque moyen élastique peut comprendre un ou plusieurs éléments en matériau élastique, par exemple un ou plusieurs éléments formés de blocs en caoutchouc ou en silicone.

Dans un exemple de réalisation les moyens élastiques 33 et 35 sont précontraints. Ainsi, dans une position neutre de la tige d'entraînement pour laquelle aucun effort n'est appliqué sur le substrat déformable, les forces appliquées respectivement par le premier moyen élastique et par le deuxième moyen élastique sont non nulles et s'opposent. Cette configuration permet, comme cela sera décrit plus en détails par la suite, lors de la génération d'un effort non nul sur le substrat dans un sens ou dans un autre, que chacun des moyens élastiques contribue à la génération de l'effort.

Plusieurs agencements des premier et deuxième moyens élastiques entre la tige d'entraînement et la tête flottante sont possibles pour permettre que le premier moyen élastique 33 et le deuxième moyen élastique 35 exercent des forces de sens opposés, ou plus précisément dont les projections sur l'axe de translation (xx') sont de sens opposés. Les figures 1A à 1C en montrent trois exemples, sans que ces exemples ne soient limitatifs.

Dans les exemples représentés sur les figures 1A et 1B, la tête flottante 30 comporte un cadre 31 agencé partiellement autour de la tige d'entraînement 20. Le cadre 31 comporte au moins une paroi supérieure 31a destinée à être fixée au substrat déformable réfléchissant 120 d'un miroir déformable 100 et une paroi inférieure 31b opposée à la paroi supérieure 31a. La paroi inférieure 31b comporte un orifice 32 traversé par la tige d'entraînement 20 de sorte qu'une partie supérieure 21 ladite tige d'entraînement 20 se trouve placée à l'intérieur du cadre 31. Le cadre 31 est représenté avec une section de forme dans le plan de la figure sensiblement rectangulaire. Il est à noter, toutefois, que le cadre 31 peut prendre tout type de forme (cylindrique, parallélépipédique, etc.) dès lors qu'il comporte une première paroi, ou coté, destinée à être fixée au substrat déformable 120 et une seconde paroi, ou coté, opposée à la première paroi et munie d'un orifice apte à laisser passer la tige d'entraînement 20 avec un jeu de part et d'autre de la tige.

Dans l'exemple de la figure 1A, le premier moyen élastique 33 comprend plusieurs ressorts de traction identiques, fixés, d'une part, à la partie supérieure 21 de la tige d'entraînement et, d'autre part, à la paroi inférieure 31b du cadre 31, et plus précisément du côté interne (par rapport au cadre) de cette paroi. Le deuxième moyen élastique 35 comprend également plusieurs ressorts de traction identiques à ceux formant le premier moyen élastique, et fixés, d'une part, à la paroi inférieure 31b du cadre 31 et, d'autre part, à une partie inférieure 23 de la tige d'entraînement située à l'extérieur du cadre. Plus précisément dans cet exemple, le deuxième moyen élastique 35 est fixé du côté externe (par rapport au cadre) de la paroi inférieure 31b.

Dans l'exemple de la figure 1B, les ressorts du premier moyen élastique 33 sont également fixés entre la partie supérieure 21 de la tige d'entraînement et la paroi inférieure 31b du cadre 31 mais les ressorts du deuxième moyen élastique 35 sont fixés entre la partie supérieure 21 de la tige d'entraînement et la paroi supérieure 31a du cadre 31. Dans cet exemple, les premier et deuxième moyens élastiques sont fixés du côté interne (par rapport au cadre) des parois respectivement inférieure et supérieure.

Dans les exemples représentés sur les figures 1A et 1B, les premier et deuxième moyens élastiques 33, 35 comprennent des ressorts de traction, par exemple trois ressorts positionnés à 120° autour d'un un axe longitudinal de la tige d'entraînement 20. Alternativement, les premier et deuxième moyens élastiques 35 comprennent un ou plusieurs ressort(s) de compression, ou tout autre moyen élastique.

Dans l'exemple des figures 1A et 1B, les moyens élastiques 33 et 35 peuvent être identiques, par exemple formés de ressorts de même longueur et de même raideur.

Dans l'exemple représenté sur la figure 1C, le premier moyen élastique 33 fonctionne en compression et est monté entre la tige d'entraînement 20 et la tête flottante 30 et le deuxième moyen élastique 35 fonctionne en traction et est monté entre la tige d'entraînement et la tête flottante 30. Là encore dans cet exemple, le premier moyen élastique 33 peut comprendre un ou plusieurs ressorts de compression, par exemple un ressort de compression centré sur l'axe de la tige d'entraînement et le deuxième moyen élastique 35 peut comprendre un ou plusieurs ressorts de traction, par exemple trois ressorts répartis à 120° autour de l'axe (xx') longitudinal de la tige d'entraînement 20. La tête flottante dans cet exemple n'est plus nécessairement un cadre avec une ouverture permettant de faire passer une extrémité de la tige d'entraînement. La tête flottante peut prendre toute forme, pleine ou creuse, avec une paroi destinée à être fixée au substrat déformable et une paroi sur laquelle sont montés les moyens élastiques. Dans l'exemple de la figure 1C, les deux parois sont confondues en une seule paroi 30 dont un côté est destiné à être fixée au substrat et l'autre côté destiné au montage des premier et deuxième moyens élastiques.

Dans un ou plusieurs exemples de réalisation, la tige d'entraînement 20 comprend au moins une traverse pour le montage des premiers et/ou des deuxièmes moyens élastiques.

Ainsi dans l'exemple de la figure 1A, la tige d'entraînement 20 comprend une première traverse 22 positionnée au niveau de la partie supérieure 21 de la tige d'entraînement 20, par exemple à l'extrémité de la partie supérieure 21. La tige d'entraînement 20 comprend dans cet exemple une deuxième traverse 24 au niveau de la partie inférieure 23 de la tige d'entraînement 20. Dans l'exemple des figures 1B et 1C, la tige d'entraînement comprend une seule traverse pour le montage des moyens élastiques : dans l'exemple de la figure 1B, seule la traverse 22 est utilisée pour le montage des premier et deuxième moyens élastiques 33, 35 et dans l'exemple de la figure 1C, seule la traverse 24 est utilisée pour le montage des premier et deuxième moyens élastiques 33, 35.

Chacune des traverses 22 et 24 peut former un socle sur lequel les moyens élastiques, respectivement 33 et 35, peuvent être attachés lorsqu'ils sont formés de ressorts de traction par exemple. Les traverses 22 et 24 peuvent former également, chacune, une surface d'appui contre laquelle les moyens élastiques 33, 35 peuvent être comprimés lorsqu'ils sont formés de ressorts de compression.

Quel que soit le mode de réalisation envisagé pour l'agencement des moyens élastiques, du fait que le premier moyen élastique et le deuxième moyen élastique relient la tête flottante et la tige d'entraînement, et ne sont donc ni l'un ni l'autre reliés au corps fixe, les efforts transmis par l'actionneur au substrat déformable 120 et les efforts subits par le dispositif d'entraînement via la tête flottante sont de même amplitude. Ainsi, dans une position neutre de la tige d'entraînement pour laquelle aucun effort n'est appliqué sur le substrat, la tige d'entraînement forme avec la tête flottante un système mécanique isolé et le dispositif d'entraînement ne subit aucun effort du fait du premier et/ou deuxième moyen élastique.

Par ailleurs, le fait que les moyens élastiques 33, 35 sont agencés entre la tête flottante 30 et la tige d'entraînement 20 - il n'y a donc aucune liaison entre la tête flottante et le corps fixe - entraîne également la possibilité d'une tige amovible par rapport au dispositif d'entrainement.

La figure 2A représente ainsi un exemple de réalisation d'un actionneur électromécanique selon la présente description dans lequel la tige d'entraînement 20 comprend un bras d'entraînement 25 et une tige 26 montée de façon amovible sur le bras d'entraînement 25. Cette variante peut s'appliquer quelle que soit la façon dont les moyens élastiques 33, 35 sont arrangés entre la tête flottante 30 et la tige d'entraînement 20.

Le bras d'entraînement 25 est entraîné par le dispositif d'entraînement et est relié à la tige 26 par exemple par l'intermédiaire de moyens d'accrochage 40, appelés aussi dispositif d'accrochage. Ces moyens d'accrochage 40 assurent un assemblage amovible de la tige 26 sur le bras d'entraînement 25. De cette façon, si le dispositif d'entraînement est usé ou endommagé, il peut être facilement démonté de la partie comprenant la tige 26 et la tête flottante 30 destinée à être fixée au substrat déformable réfléchissant 120 ; un nouveau dispositif d'entraînement peut alors être remonté sans qu'il soit nécessaire d'intervenir sur le substrat ou à proximité du substrat. Une telle intervention, éloignée du substrat du miroir, permet d'éviter tout dommage dudit substrat.

Comme représenté sur la figure 2A, les moyens d'accrochage 40 peuvent être, au moins en partie, incorporés dans le bras d'entraînement 25 et/ou la tige 26. Dans ce mode de réalisation, les moyens d'accrochage 40 peuvent comporter un ou plusieurs aimant(s). Dans une variante, les moyens d'accrochage 40 comportent un seul aimant 41 ou 42 inséré dans le bras d'entraînement 25 ou la tige 26 et apte à maintenir la tige avec le bras d'entraînement ; dans cette variante, l'élément (tige ou bras d'entraînement) qui ne contient pas l'aimant comporte au moins une partie en matériau ferreux, par exemple en acier doux, apte à être attiré par l'aimant. Dans une variante de ce mode de réalisation, montrée sur la figure 2A, les moyens d'accrochage 40 comportent un premier aimant 41 intégré à l'extrémité du bras d'entraînement 25 et un second aimant 42 incorporé dans la partie inférieure 23 de la tige 26. Selon une variante, l'aimant 42 est intégré dans la seconde traverse 24 de la tige 26 lorsque cette deuxième traverse est présente pour le montage du premier et/ou deuxième moyen élastique 33, 35 (cas des figures 1A et 1C par exemple). Selon ces variantes, la force d'accrochage est calculée de façon à conserver une liaison solidaire entre le bras 25 et la tige 26, pour toute la gamme d'efforts de l'actionneur 130.

Selon une variante, les moyens d'accrochage 40 peuvent comprendre des éléments indépendants du bras d'entraînement 25, positionnés et fixés à la jonction entre la tige 26 et le bras d'entraînement 25 (non représentés sur les figures) pour assurer l'assemblage, par exemple une vis traversante ou un collier de serrage. De façon générale, tout type de fixation peut être utilisé dès lors qu'il permet de maintenir la tige 26 assemblée avec le bras d'entraînement 25 tout en assurant l'amovibilité de la partie de l'actionneur comprenant le bras d'entraînement et le dispositif d'entraînement, par exemple pour permettre un remplacement.

Quel que soit le mode de réalisation choisi pour le dispositif d'accrochage 40, la force d'accrochage de la tige 26 sur le bras d'entraînement 25 peut être choisie inférieure à la force maximale admissible par les éléments non rigides de la tête flottante 30, à savoir par exemple les moyens élastiques 33 et 35. De cette façon, la force exercée sur les moyens d'accrochage 40 pour démonter la tige 26 du bras d'entraînement 25 ne risque pas de détériorer ces éléments élastiques.

La figure 2B représente un exemple de dispositif d'entraînement selon la présente description. Sur cette figure, seul le corps fixe 10 de l'actionneur et le dispositif d'entraînement sont représentés.

Le dispositif d'entraînement comprend un moteur rotatif 11 entraînant en rotation une tige filetée 13 (filetage 131), elle-même entraînant un écrou 14 (filetage 141), bloqué en rotation au moyen d'une goupille 15 apte à se déplacer dans une rainure 101 du corps fixe 10. Il résulte de la rotation de la vis filetée 13 une translation de l'écrou 14 selon une direction dont le sens dépend du sens de rotation de la vis. L'écrou 14 peut être relié à la tige d'entraînement ou former directement le bras d'entraînement 25 (figure 2A).

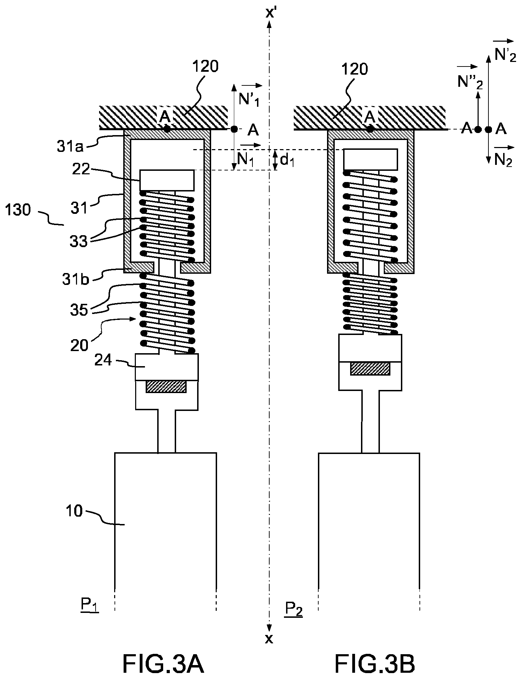

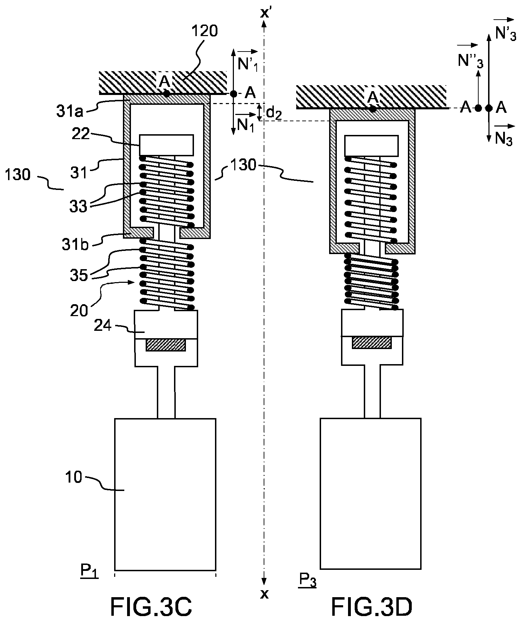

Les figures 3A à 3D illustrent, selon un exemple, le fonctionnement de l'actionneur selon la présente description. Sur ces figures, l'actionneur 130 est du type de celui décrit sur la figure 1A (ou sur la figure 2A), avec un premier moyen élastique 33 agencé entre une première traverse 22 d'une partie supérieure 21 de la tige d'entraînement située à l'intérieur du cadre 31 formant la tête flottante 30 et la paroi inférieure 31 b du cadre 31 et un deuxième moyen élastique 35 agencé entre la paroi inférieure 31b du cadre flottant et une deuxième traverse 24 d'une partie inférieure 23 de la tige d'entraînement. Dans l'exemple représenté à titre d'illustration sur les figures 3A à 3D, les moyens élastiques 33 et 35 comportent chacun un ressort de compression précontraint monté autour de la tige d'actionnement 20. Quel que soit le mode de réalisation de l'actionneur cependant (et notamment l'un ou l'autre des exemples décrits sur les figures 1A à 1C), le principe décrit au moyen des figures 3A, 3B, 3C et 3D peut s'appliquer.

Les figures 3A et 3C, identiques, représentent l'actionneur 130 dans la position neutre de la tige d'entraînement, notée P₁, position dans laquelle l'actionneur n'applique aucune force sur le substrat réfléchissant 120. La figure 3B représente l'actionneur 130 dans un état d'actionnement, lorsque la tige d'entraînement est déplacée dans un sens ou l'autre par rapport à la position neutre (position P₂). La figure 3D représente l'actionneur 130 dans le cas d'une réaction du substrat sur l'actionneur, résultant par exemple de la force de réaction du substrat déformable sur la tête flottante sous l'effet des autres actionneurs, entraînant un déplacement de la tête flottante (position P₃).

Dans la position neutre P₁ illustrée sur les figures 3A et 3C, la tête flottante 30 n'applique pas d'effort sur le substrat déformable 120. Dans cette position en effet, les forces générées sur le cadre 31 par les premier et deuxième ressorts 33 et 35, précontraints de telle sorte à se trouver à peu près à mi-course de leur amplitude de compression, sont opposées. Ainsi, dans cet exemple, le premier ressort 33 exerce une force **N₁** sur le cadre 31, dans une direction notée x sur la figure 3A, et le second ressort 35 exerce une force **N'₁** sur la le cadre 31 dans une direction x' de sens opposé. Sur les figures 3A à 3D, toutes les forces sont déterminées au niveau d'un point d'application A du cadre situé au niveau de la paroi en contact avec le substrat déformable. Par souci de lisibilité, les forces sont représentées en dehors du schéma de l'actionneur. Les forces **N₁** et **N'₁** sont égales en valeur absolue mais de sens opposés de telle sorte que la force résultante **N"₁** est nulle. Aucune force n'est donc transmise par la tête flottante 30 au substrat 120. Par ailleurs, comme les forces **N₁** et **N'₁** ne sont appliquées qu'entre des points de la tige d'entraînement et de la tête flottante, et que la somme de ces forces est nulle, l'ensemble formé de la tige d'entraînement et de la tête flottante forme un système mécanique isolé et aucun effort n'est appliqué non plus sur le dispositif d'entraînement, ce qui permet d'en limiter l'usure.

Comme précédemment expliqué, les premier et deuxième ressorts 33, 35 sont précontraints lors de leur montage dans l'actionneur afin de permettre que chaque ressort contribue à l'effort appliqué sur le substrat déformable. La précontrainte de chacun des ressorts est par exemple égale à la moitié de l'amplitude totale de compression de chacun des ressorts. Ainsi par exemple, si chaque ressort présente une amplitude de compression correspondant à l'application d'une force sur le cadre 31 variant respectivement entre 0 et 20 N pour un des ressorts et 0 et -20 N pour le deuxième ressort, chacun des deux ressorts pourra être précontraint de telle sorte à appliqué en position neutre une force égale respectivement à 10 N et -10 N.

Lorsque le dispositif d'entraînement est mis en fonctionnement, par exemple le moteur linéaire illustré sur la figure 2B, la tige d'entrainement est déplacée en translation, par exemple dans la direction x' avec une amplitude d₁, comme cela est montré sur la figure 3B, pour se trouver dans une position d'actionnement référencée P₂. Il est à noter qu'en l'absence de substrat 120 pour opposer une résistance à la force de poussée générée par le dispositif d'entraînement, la tête flottante se déplacerait d'une distance d₁ identique. En présence du substrat déformable dont la force de réaction s'oppose au déplacement de la tête flottante, sous l'effet du déplacement d₁ de la tige d'entraînement 20 vers le substrat 120, le second ressort 35 se comprime davantage et le premier ressort 33 se décomprime. Le second ressort 35 exerce alors une force **N'₂** sur le cadre 31, dans la direction x', de valeur absolue supérieure à **N'₁.** Le premier ressort 33 exerce une force **N₂** sur le cadre 31, dans la direction x, de valeur absolue inférieure à **N'₁.** La force résultante **N"₂** appliquée sur le cadre 31 est égale à la somme de **N'₂** et **N₂** et les deux ressorts 33 et 35 travaillent ensemble pour générer la force d'actionnement **N"₂.** La force résultante **N"₂** est également la force d'actionnement appliquée par la tête flottante 30 sur le substrat 120, et dans l'exemple de la figure 3B, elle s'exerce dans la direction x' c'est-à-dire dans le sens de la poussée.

De façon symétrique, lorsque la tige d'entraînement 20 est entraînée en translation dans la direction x avec une amplitude d₁, le premier ressort 33 se comprime et le second ressort 35 se décomprime, générant une force d'actionnement égale, en valeur absolue, à la force d'actionnement **N"₂** mais dans le sens opposé. Dans ce cas, une force est exercée sur le substrat déformable dans le sens de la traction.

Il apparaît ainsi que dans un actionneur selon la présente description, lorsque les premier et deuxième moyens élastiques sont précontraints, ils agissent ensemble (les variations d'effort sont de même signe) pour exercer soit une poussée, soit une traction. Ainsi, avec des gammes d'effort comprises par exemple entre 0 et 20 N pour chaque moyen élastique sur la tête flottante, on pourra atteindre une gamme d'effort comprise entre -20 et + 20 N pour l'actionneur sur le substrat déformable.

La configuration de la tête flottante 30 selon la présente description permet par ailleurs que les efforts transmis par la tête flottante 30 sur le dispositif d'entraînement sont de même amplitude (mais de sens opposés) aux efforts appliqués par la tête flottante 30 sur le substrat 120. En effet, quelle que soit la configuration, à l'équilibre (c'est-à-dire quand les éléments de l'actionneur ne sont plus en mouvement), comme la tête flottante n'est reliée qu'au substrat et au dispositif d'entraînement via la tige d'entraînement, il s'établit un équilibre entre la force appliquée par la tête flottante au substrat et la force appliquée par la tête flottante au dispositif d'entraînement via la tige d'entrainement. Comme cela a déjà été remarqué, le dispositif d'entraînement, en position neutre, ne subit donc aucune contrainte de la part de la tête flottante via la tige d'entrainement et subit un effort compris dans la même gamme d'effort que celle fournie au substrat dans une position d'actionnement. Ainsi par exemple, si l'actionneur fournit une gamme d'efforts comprise entre -20N et +20N, alors les efforts subis par le dispositif d'entraînement de la part de la tête flottante via la tige d'entrainement sont également compris entre -20N et +20N. Cet équilibre des efforts appliqués sur le dispositif d'entraînement a pour effet que les pièces de l'actionneur 130 ne s'usent pas prématurément. Dans le dispositif de l'art antérieur tel que décrit sur la figure 6 au contraire, l'effort subit par le dispositif d'entraînement ne s'annule jamais et s'applique toujours dans le même sens, favorisant l'usure des pièces.

Lorsque le dispositif d'entraînement comprend un moteur rotatif associé à un système d'entrainement de type « vis-écrou » comme cela est représenté sur la figure 2B par exemple, il présente l'avantage de conserver sa position lorsqu'il est à l'arrêt, c'est-à-dire quand l'alimentation électrique est coupée. La tige d'entraînement 20 peut donc garder une position d'actionnement P₂ et l'effort sur le substrat 120 peut être maintenu lorsque le moteur est à l'arrêt.

Comme cela est illustré sur la figure 3D, dans un miroir déformable, le substrat 120 peut être amené à se déformer sensiblement, par exemple sous l'effet d'actionneurs voisins. Un déplacement d₂ du substrat déformable entraîne un déplacement de la tête flottante qui génère alors une force de réaction sur le cadre 31. En effet, sous l'effet du déplacement d₂, le premier ressort 33 se décomprime et le second ressort 35 se comprime. Le second ressort 35 exerce alors une force **N'₃** sur le cadre 31, dans la direction x', de valeur absolue supérieure à **N'₁.** Le premier ressort 33 exerce une force **N₃** sur la le cadre 31, dans la direction x, de valeur absolue inférieure à **N₁.** La force résultante **N"₃** appliquée sur le cadre 31 est égale à la somme de **N'₃** et **N₃.** La force résultante **N"₃** est la force de réaction appliquée par la tête flottante 30 au substrat 120, dans la direction x'. Dans ce cas, les deux ressorts 33 et 35 travaillent ensemble pour générer la force de rétroaction **N"₃**.

Dans le cas où la distance d₁ de déplacement de la tige d'entraînement 20 (figure 3B) est égale, en valeur absolue, à la distance de déplacement d₂ du substrat déformable 120, alors la force de réaction **N"₃** appliquée par la tête flottante 30 au substrat déformable 120 est égale, en valeur absolue, à la force d'actionnement **N"₂** appliquée par ladite tête flottante 30 sur le substrat déformable 120. Ainsi, la force d'actionnement **N"₂** de l'actionneur est égale à sa force de réaction **N"₃.**

Dans les exemples des figures 3A à 3D, l'hypothèse est faite que les ressorts appliquent des forces dans une direction parallèle à celle de l'axe de translation (xx'). En pratique, en fonction de la façon dont sont montés les ressorts, les forces appliquées peuvent comprendre une composante non parallèle à l'axe de translation, auquel cas on considère les projections des forces sur l'axe de translation.

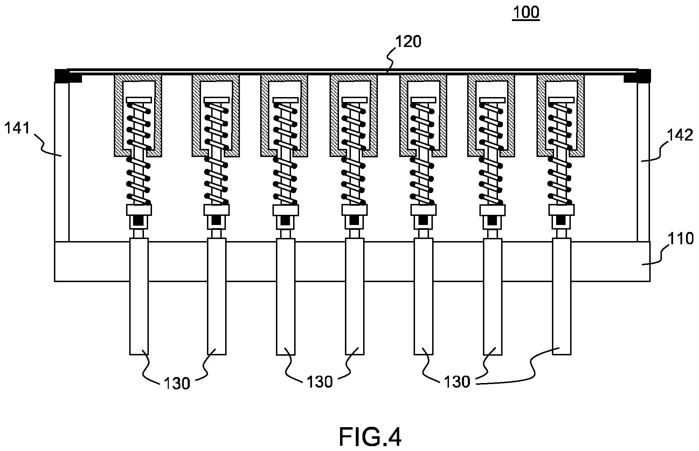

L'actionneur 130 tel qu'il vient d'être décrit est destiné à être monté au sein d'un miroir déformable dont un exemple est montré sur la figure 4. Le miroir déformable 100 comprend un châssis 110 sur lequel est monté un substrat réfléchissant déformable 120. Le substrat 120 peut être fixé sur ledit châssis 110 par une liaison mécanique rigide ou par une liaison souple, cette liaison pouvant être réalisée par l'intermédiaire d'un ou plusieurs éléments mécaniques (pieds ou couronnes souples ou rigides, vérins collés, etc.). Le miroir déformable 100 comporte en outre une pluralité d'actionneurs 130 selon la présente description, par exemple des actionneurs tels que décrits au moyens des exemples présentés précédemment. Chaque actionneur 130 est fixé par une extrémité de la tête flottante sur une face du substrat réfléchissant déformable 120 opposée à la face réfléchissante du substrat. En outre, chaque actionneur 130 est monté sur le châssis de façon à ce que le corps fixe de l'actionneur soit solidaire du châssis.

Comme précédemment décrit, dans un mode de réalisation où la tige d'entraînement 20 de l'actionneur 130 comprend un bras d'entraînement 25 et une tige 26 amovible (voir figure 2A par exemple), il peut être avantageux que la force d'accrochage de la tige 26 sur le bras d'entraînement 25 soit inférieure à la force maximale admissible par les moyens élastiques 33 et 35 de la tête flottante 30.

La figure 5 montre un exemple d'agencement des actionneurs au sein du châssis 110 du miroir déformable qui prévoit une butée mécanique pour la tige d'entraînement 20 empêchant toute détérioration des moyens élastiques de la tête flottante 30 pendant l'opération de décrochage du bras d'entraînement 25 et du corps fixe 10 de l'ensemble tige amovible et tête flottante. Dans cet exemple, la tige d'entraînement 20 de l'actionneur (dont une partie seulement est représentée sur la figure 5) est au moins partiellement insérée dans un orifice 112 réalisé dans le châssis 110. L'orifice 112 forme un logement pour le bras d'entraînement 25. Une traverse 24 de la tige d'entraînement 20 est adaptée pour venir en butée contre la plage 114 formée sur la surface du châssis, aux abords de l'orifice 112 lors de l'opération de décrochage du bras d'entraînement 25 et du corps fixe 10 de l'ensemble tige amovible et tête flottante. Dans le cas où le dispositif d'accrochage 40 comprend un aimant 41 inséré dans le bras d'entraînement 25, celui-ci peut être positionné sous la plage 114 de l'orifice 112. La traverse 24 comporte alors une partie 27 formant saillie, cette partie formant saillie étant apte à être en contact avec l'aimant 41 lorsque le bras d'entraînement 25 est monté. Par ailleurs, la plage 114 forme une butée pour la traverse 24. De cette façon, lors du démontage du bras d'entraînement 25 et du corps fixe 10, la traverse 24 de la tige d'entraînement 20 reste au-dessus de la plage 114 empêchant toute détérioration des moyens élastiques de la tête flottante 30.

Bien que décrit à travers un certain nombre d'exemples de réalisation, l'actionneur de l'invention comprend différentes variantes, modifications et perfectionnements qui apparaîtront de façon évidente à l'homme du métier, étant entendu que ces différentes variantes, modifications et perfectionnements font partie de la portée de l'invention telle que définie par les revendications qui suivent.

## Revendications

1. Actionneur (130) pour la génération d'un effort bidirectionnel, configuré pour être intégré dans un miroir déformable comprenant un châssis et un substrat réfléchissant déformable fixé sur le châssis, l'actionneur comprenant :
- un corps fixe (10) configuré pour être monté solidaire dudit châssis;
- un dispositif d'entraînement;
- une tige d'entraînement (20) configurée pour être entraînée dans un mouvement de translation par rapport au corps fixe (10), selon un axe de translation (xx'), au moyen du dispositif d'entraînement;
l'actionneur étant **caractérisé en ce qu'**il comprend en outre :
- une tête flottante (30) configurée pour être fixée au substrat réfléchissant déformable, et montée de façon flottante par rapport à la tige d'entraînement au moyen de premier et deuxième moyens élastiques (33, 35);
et **en ce que** :
- les premier et deuxième moyens élastiques (33, 35) sont montés chacun entre la tige d'entraînement (20) et la tête flottante (30) et sont configurés pour appliquer sur la tête flottante des forces dont les projections sur l'axe de translation (xx') sont de sens opposés.

2. Actionneur selon la revendication 1, dans lequel la tige d'entraînement (20) comprend un bras d'entraînement (25) et une tige (26) montée de façon amovible sur le bras d'entraînement (25), l'actionneur comprenant en outre des moyens d'accrochage (40) de la tige (26) sur le bras d'entraînement (25).

3. Actionneur selon la revendication 2, dans lequel les moyens d'accrochage (40) comprennent au moins un aimant (41, 42), inséré dans la tige (26) et/ou dans le bras d'entraînement (25).

4. Actionneur selon l'une quelconque des revendications précédentes, dans lequel :
- la tête flottante (30) comprend un cadre (31) arrangé autour d'une partie supérieure (21) de la tige d'entraînement, le cadre (31) présentant une paroi supérieure (31a) destinée à être fixée au substrat déformable et une paroi inférieure (31b) opposée à la paroi supérieure (31a); et
- le premier moyen élastique (33) est monté entre la partie supérieure de la tige d'entraînement et la paroi inférieure (31b) du cadre (31).

5. Actionneur selon la revendication 4, dans lequel le deuxième moyen élastique (35) est monté entre une partie inferieure (23) de la tige d'entraînement située à l'extérieur du cadre et la paroi inférieure (31b) du cadre (31).

6. Actionneur selon la revendication 4, dans lequel le deuxième moyen élastique (35) est monté entre la partie supérieure de la tige d'entraînement et la paroi supérieure (31a) du cadre (31).

7. Actionneur selon l'une quelconque des revendications 5 à 6, dans lequel les premier et deuxième moyens élastiques (33, 35) sont formés d'éléments identiques.

8. Actionneur selon l'une quelconque des revendications 1 à 3, dans lequel :
- le premier moyen élastique (33) fonctionne en compression et est monté entre la tige d'entraînement (20) et la tête flottante (30) ; et
- le deuxième moyen élastique (35) fonctionne en traction et est monté entre la tige d'entraînement et la tête flottante (30).

9. Actionneur selon l'une quelconque des revendications précédentes, dans lequel la tige d'entraînement (20) comprend au moins une traverse (22, 24) pour le montage du premier et/ou du deuxième moyens élastique (33, 35).

10. Actionneur selon l'une quelconque des revendications précédentes, dans lequel les premier et deuxième moyens élastiques (33, 35) sont précontraints.

11. Actionneur selon l'une quelconque des revendications précédentes, dans lequel le premier et/ou le deuxième moyen élastique (33, 35) comprend un ou plusieurs ressorts de traction ou de compression.

12. Actionneur selon l'une quelconque des revendications précédentes, dans lequel le dispositif d'entraînement comprend un moteur linéaire.

13. Miroir déformable (100) comprenant :
- un châssis (110),
- un substrat réfléchissant déformable (120) fixé sur le châssis (110), et
- une pluralité d'actionneurs (130) selon l'une quelconque des revendications précédentes, le corps fixe (10) de chaque actionneur (130) étant solidaire du châssis (110) et la tête flottante (30) de chaque actionneur étant solidaire du substrat déformable (120).

14. Miroir déformable selon la revendication 13, dans lequel le châssis (110) comprend, pour chaque actionneur :
- un logement (112) apte à recevoir au moins partiellement le corps fixe (10) de l'actionneur (130), et
- une plage (114), aux abords du logement (112), formant une butée pour la tige d'entraînement (20) dudit actionneur.

## Patentansprüche

1. Aktuator (130) zur Erzeugung einer bidirektionalen Kraft, das derart konfiguriert ist, dass es in einen deformierbaren Spiegel integriert werden kann, der einen Rahmen und ein deformierbares reflektierendes Substrat umfasst, das an dem Rahmen befestigt ist, wobei das Stellglied Folgendes aufweist:
- einen festen Körper (10), der derart ausgebildet ist, dass er fest mit dem Rahmen verbunden ist;
- eine Antriebsvorrichtung;
- eine Antriebsstange (20), die derart ausgebildet ist, dass sie mittels der Antriebsvorrichtung in eine Translationsbewegung in Bezug auf den festen Körper (10) gemäß einer Translationsachse (xx') angetrieben wird;
wobei der Aktuator **dadurch gekennzeichnet ist, dass** er ferner aufweist:
- einen schwimmenden Kopf (30), der derart ausgebildet ist, dass er an dem verformbaren reflektierenden Substrat befestigt werden kann, und der mittels eines ersten und eines zweiten elastischen Elements (33, 35) schwimmend in Bezug auf die Antriebsstange gelagert ist;
und dass:
- die ersten und zweiten elastischen Elemente (33, 35) jeweils zwischen der Antriebsstange (20) und dem schwimmenden Kopf (30) angebracht und derart ausgebildet sind, dass sie auf den schwimmenden Kopf eine Kraft ausüben, deren Projektionen auf die Translationsachse (xx') in entgegengesetzten Richtungen wirken.

2. Aktuator nach Anspruch 1, wobei die Antriebsstange (20) einen Antriebsarm (25) und eine Stange (26) aufweist, die abnehmbar an dem Antriebsarm (25) angebracht ist, wobei der Aktuator ferner Befestigungsmittel (40) zum Einhaken der Stange (26) an dem Antriebsarm (25) aufweist.

3. Aktuator gemäß Anspruch 2, wobei die Befestigungsmittel (40) mindestens einen Magneten (41, 42) aufweisen, der in die Stange (26) und/oder in den Antriebsarm (25) eingesetzt ist.

4. Aktuator gemäß einem der vorhergehenden Ansprüche, wobei:
- der schwimmende Kopf (30) einen Rahmen (31) aufweist, der um einen oberen Abschnitt (21) der Antriebsstange angeordnet ist, wobei der Rahmen (31) eine obere Wand (31a) zur Befestigung an dem verformbaren Substrat und eine der oberen Wand (31a) gegenüberliegende untere Wand (31b) aufweist; und
- das erste elastische Element (33) zwischen dem oberen Teil der Antriebsstange und der unteren Wand (31b) des Rahmens (31) angebracht ist.

5. Aktuator gemäß Anspruch 4, wobei das zweite elastische Element (35) zwischen einem unteren Teil (23) der Antriebsstange, der sich außerhalb des Rahmens befindet, und der unteren Wand (31b) des Rahmens (31) angebracht ist.

6. Aktuator gemäß Anspruch 4, wobei das zweite elastische Element (35) zwischen dem oberen Teil der Antriebsstange und der oberen Wand (31a) des Rahmens (31) montiert ist.

7. Aktuator nach einem der Ansprüche 5 bis 6, wobei das erste und das zweite elastische Element (33, 35) aus identischen Bauelementen gebildet sind.

8. Aktuator nach einem der Ansprüche 1 bis 3, wobei:
- das erste elastische Element (33) unter Druck betrieben wird und zwischen der Antriebsstange (20) und dem schwimmenden Kopf (30) angebracht ist; und
- das zweite elastische Element (35) auf Zug betrieben wird und zwischen der Antriebsstange und dem schwimmenden Kopf (30) montiert ist.

9. Aktuator gemäß einem der vorhergehenden Ansprüche, wobei die Antriebsstange (20) mindestens einen Querträger (22, 24) zur Montage des ersten und/oder des zweiten elastischen Elements (33, 35) aufweist.

10. Aktuator nach einem der vorhergehenden Ansprüche, wobei das erste und das zweite elastische Element (33, 35) vorgespannt sind.

11. Aktuator nach einem der vorhergehenden Ansprüche, wobei das erste und/oder das zweite elastische Element (33, 35) eine oder mehrere Zug- oder Druckfedern aufweist.

12. Aktuator nach einem der vorhergehenden Ansprüche, wobei die Antriebsvorrichtung einen Linearmotor aufweist.

13. Verformbarer Spiegel (100), aufweisend:
- einem Rahmen (110),
- ein verformbares reflektierendes Substrat (120), das an dem Rahmen (110) befestigt ist, und
- eine Vielzahl von Aktuatoren (130) gemäß einem der vorhergehenden Ansprüche, wobei der feste Körper (10) jedes Aktuators (130) fest mit dem Rahmen (110) verbunden ist und der schwebende Kopf (30) jedes Aktuators fest mit dem verformbaren Substrat (120) verbunden ist.

14. Verformbarer Spiegel gemäß Anspruch 13, wobei der Rahmen (110) für jeden Aktuator aufweist:
- eine Aufnahme (112), die ausgebildet ist, um mindestens teilweise den festen Körper (10) des Aktuators (130) aufzunehmen, und
- einen Bereich (114) an den Rändern der Aufnahme (112), der einen Anschlag für die Antriebsstange (20) des Aktuators bildet.

## Claims

1. An actuator (130) for generating a bidirectional force, configured to be integrated into a deformable mirror comprising a frame and a deformable reflective substrate attached to the frame, the actuator comprising:
- a stationary body (10) configured to be integrated in the frame;
- a drive device;
- a drive rod (20) configured to be driven in a translatory movement with respect to the stationary body (10), along an axis of translation (xx'), by means of the drive device;
the actuator being **characterized in that** it further comprises:
- a floating head (30) configured to be attached to the deformable reflective substrate, and mounted in floating manner with respect to the drive rod via first and second elastic means (33, 35);
and **in that**:
- the first and second elastic means (33, 35) are each mounted between the drive rod (20) and the floating head (30) and are configured to apply forces to the floating head, whose projections on the translation axis (xx') are of opposite directions.

2. The actuator as claimed in claim 1, wherein the drive rod (20) comprises a drive arm (25) and a rod (26) mounted in removable manner on the drive arm (25), the actuator further comprising means (40) of coupling the rod (26) to the drive arm (25).

3. The actuator as claimed in claim 2, wherein the coupling means (40) comprise at least one magnet (41, 42), inserted in the rod (26) and/or in the drive arm (25).

4. The actuator as claimed in any one of the preceding claims, wherein:
- the floating head (30) comprises a casing (31) arranged about an upper portion (21) of the drive rod, the casing (31) having an upper wall (31a) designed to be attached to the deformable substrate and a lower wall (31b), opposite the upper wall (3 1a); and
- the first elastic means (33) is mounted between the upper portion of the drive rod and the lower wall (31b) of the casing (31).

5. The actuator as claimed in claim 4, wherein the second elastic means (35) is mounted between a lower portion (23) of the drive rod situated outside of the casing and the lower wall (31b) of the casing (31).

6. The actuator as claimed in claim 4, wherein the second elastic means (35) is mounted between the upper portion of the drive rod and the upper wall (31a) of the casing (31).

7. The actuator as claimed in any one of claims 5 to 6, wherein the first and second elastic means (33, 35) are formed by identical elements.

8. The actuator as claimed in any one of claims 1 to 3, wherein:
- the first elastic means (33) works by compression and is mounted between the drive rod (20) and the floating head (30); and
- the second elastic means (35) works by traction and is mounted between the drive rod and the floating head (30).

9. The actuator as claimed in any one of the preceding claims, wherein the drive rod (20) comprises at least one cross piece (22, 24) for the mounting of the first and/or the second elastic means (33, 35).

10. The actuator as claimed in any one of the preceding claims, wherein the first and second elastic means (33, 35) are prestressed.

11. The actuator as claimed in any one of the preceding claims, wherein the first and second elastic means (33, 35) comprise one or more traction or compression springs.

12. The actuator as claimed in any one of the preceding claims, wherein the drive device comprises a linear motor.

13. A deformable mirror (100) comprising:
- a frame (110),
- a deformable reflective substrate (120) attached to the frame (110), and
- a plurality of actuators (130) as claimed in any one of the preceding claims, the stationary body (10) of each actuator (130) being integrated in the frame (110) and the floating head (30) of each actuator being integrated in the deformable substrate (120).

14. The deformable mirror as claimed in claim 13, wherein the frame (110) comprises, for each actuator:
- a housing (112) able to receive at least partly the stationary body (10) of the actuator (130), and
- a surface (114) near the housing (112), forming an abutment for the drive rod (20) of said actuator.
